# EUROPEAN PATENT APPLICATION

(11) **EP 2 883 516 A1**
(43) Date of publication of application: **17.06.2015**
(21) Application number: 13196925.5
(22) Date of filing: 12.12.2013
(51) Int. Cl.: A61C 17/22

(54) **Electric toothbrush**

(71) Applicant: Braun GmbH, 61476 Kronberg (DE)
(72) Inventor: Kreßner, Gerhard, 63674 Altenstadt (DE)
(74) Representative: Joos, Uta Susanne

(57) **Abstract**

Attachment part of an electric toothbrush comprising a tubular connecting piece adapted to be connected to a neck of a handpiece of the toothbrush by axial movement along the longitudinal axis of the connecting piece and the handpiece. A radially movable latching element of the attachment part is adapted to lock the attachment part relative to the handpiece. The coupling between the handpiece and the attachment part includes a latching element and a latching contour which are adapted to lockingly engage with each other by radial movement relative to each other so as to axially lock the attachment part to the handpiece. Thereby, the latching element is provided with a circumferentially sloped unlocking surface for transforming a rotational movement of the connecting piece about the longitudinal axis of the tubular connecting piece into a radial movement of the latching element.

## Description

### FIELD OF THE INVENTION

There is provided an electric toothbrush. In particular, there is provided an attachment part for an electric toothbrush such as an attachable brush head, said attachment part comprising a tubular connecting piece adapted to be connected to a neck of a handpiece of the toothbrush by axial movement along the longitudinal axis of the connecting piece and the handpiece. Said connecting piece may have at least one peripheral mating surface adapted to be engaged with inner and/or outer peripheral surfaces of said neck of the handpiece, wherein a radially movable latching element is adapted to lock the attachment part relative to said handpiece. Furthermore, said handpiece of the toothbrush may have a neck provided with inner and outer peripheral surfaces which are adapted to be engaged with the inner and outer mating surfaces of the attachment part.

### BACKGROUND OF THE INVENTION

Electric toothbrushes often have removable and exchangeable attachments such as attachable brush heads so that a common handpiece can be used by multiple family members, each having his or her own personal attachment part. Such attachments also allow for use of different types of attachments such as one or more different brush heads or an interdental cleaner. Moreover, in case of wear only the attachment, but not the electric toothbrush as a whole, needs to be replaced.

During operation, various forces must be transmitted by the coupling between the attachment part and the handpiece of the toothbrush, including, but not limited to the cleaning forces and drive forces which may include axial and radial forces that act on the attachment part and on the handpiece in terms of reaction forces. To take up such forces, the tubular connecting piece of the attachment part may be pushed onto the neck of the toothbrush so that peripheral surfaces of the connecting piece and the handpiece neck come into engagement with each other to rigidly connect the attachment part to the handpiece. To achieve such mating of the coupling surfaces, the attachment part may be moved axially, i.e. substantially along the longitudinal axis of the tubular connecting piece onto the neck of the handpiece with the longitudinal axes of the attachment part and the handpiece being in alignment. In order to prevent unintentional loosening or removal of the attachment part from the handpiece, flexible locking tongs may be used, such locking tongs being able to flex away into an unlocked position for the coupling/decoupling process and being elastically urged into a locking position when the attachment part is fully set atop the handpiece.

An electric toothbrush having such attachment part and such handpiece is known from, e.g., document EP 2 135 580 A1 which suggests to provide the attachment part with an interior latching element that is adapted to move into the interior of the neck of the handpiece, wherein the interior latching element may be radially inwardly offset to allow a wall of the neck of the handpiece to move into the gap between such interior latching element and the outer tubular end portion of the attachment part.

However, with such coupling structures using peripheral surfaces for taking up radial forces and bending moments and using interior latching elements to take up axial forces, it is difficult to combine a secure and sufficiently rigid connection during operation with easy operation of the coupling allowing engagement and disengagement with low operation forces. In particular, so as to hold the mating peripheral surfaces in form-fitting engagement with each other, the latching element needs to be sufficiently strong to prevent the said mating peripheral surfaces from unintentional disengagement due to axial loosening. On the other hand, such high-strength latching elements are usually difficult to operate when coupling or decoupling the attachment part. Such problems become more severe due to tolerances of the mating surfaces in shape as well as in dimension, thereby causing either play or problems in getting the latching element locked. In particular when a drive train extending from the handpiece to the attachment's working head carries out oscillating radial and/or axial movements as it is the case with multiple linkage trains, multi-axial forces and bending moments act on the mating coupling surfaces, thus increasing the tendency of the coupling to become disengaged and furthermore, creating the impression of resilient and flabby handling with looseness of the coupling allowing for micromovements of the attachment relative to the handpiece.

Accordingly, it is an objective to provide an improved electric toothbrush and attachment parts thereof that overcome the aforementioned shortcomings of the prior art and further develop the prior art. It is another objective to allow for an easy to operate coupling of the attachment part to the toothbrush handpiece securely taking up axial and radial operation and driving forces and bending moments as well as resulting reaction forces and moments. It is a still further objective to reduce undesired effects of tolerances and to achieve a play-free coupling of the attachment part to the handpiece to provide for an exact handling and a tight, direct responsiveness to exactly transform movements of an operator's hand gripping the handpiece into corresponding movements of the working head of the attachment part.

### SUMMARY OF THE INVENTION

According to one aspect there is provided an attachment part for an electric toothbrush, comprising a tubular connecting piece adapted to be connected to a neck of a handpiece of the toothbrush by axial movement of the connecting piece relative to the handpiece along a longitudinal axis thereof, said connecting piece having at least one peripheral mating surface adapted to engage with an inner or outer peripheral surface of the neck of the handpiece, wherein at least one latching element is provided for locking the connecting piece onto the neck, said latching element being radially movable to lock and/or unlock with and/or from a latching contour of the neck by radial movement, characterized in that the latching element is provided with a circumferentially sloped unlocking surface for transforming a rotational movement of the connecting piece about the longitudinal axis of the tubular connecting piece into a radial movement of the latching element.

According to another aspect there is provided a handpiece of an electric toothbrush, comprising a neck having at least one peripheral surface adapted to be engaged with an inner or outer mating surface of an attachment part, wherein said at least one peripheral surface is provided with a latching contour adapted to lock with a latching element of the attachment part, said latching contour being provided with a circumferentially sloped unlocking surface for transforming circumferential movement of the latching contour relative to the latching element of the attachment part due to rotation of the attachment part relative to the handpiece about a longitudinal axis thereof into a radial movement of the latching element.

In accordance with another aspect, there is provided a toothbrush comprising a handpiece and an attachment part as described herein.

### BRIEF DESCRIPTION OF THE DRAWINGS

These and other features will become apparent not only from the claims but also from the following description and the drawings, with the aid of which example embodiments are explained below.
- Fig. 1:: shows a partial sectional view of an example electric toothbrush, wherein an attachable brush head can be fixedly attached to the neck of a handpiece by means of a double cone including pairs of inner and outer conical peripheral surfaces;
- Fig. 2:: shows an enlarged cross-sectional view of an example of the engaging conical surfaces of the double cone for coupling the tubular connecting piece of the attachment part to the neck of the handpiece;
- Fig. 3:: shows an enlarged, fractional cross-sectional view of an example of the engaged pairs of conical surfaces for coupling the attachment part to the handpiece neck, wherein the latching elements for axially locking the attachment part onto the handpiece neck are in particular shown;
- Fig. 4:: shows a cross-sectional view of the latching elements along line A-A in Fig. 3, wherein the sloped unlocking surfaces of the latching elements to allow unlocking by means of rotation of the attachment part relative to the handpiece are in particular shown;
- Fig. 5:: shows an enlarged cross-sectional view of an example of an latching element showing the convex locking contour for compensating tolerances and achieving press-fitting engagement;
- Fig. 6:: shows a fractional cross-sectional view of an example of the engaged pairs of conical surfaces for coupling the attachment part to the handpiece neck, wherein the latching elements for axially locking the attachment part onto the handpiece neck are shown to be part of rocking bars allowing for unlocking the latching elements by means of pushing down the operation ends of such rocking bars;
- Fig. 7:: shows a side view of an example of the handpiece neck and the latching contour exemplary provided therein;
- Fig. 8:: shows a partial perspective view of the conical mating surface of the attachment part which, e.g. may be provided with a three-dimensional surface structure including longitudinal ribs; and
- Fig. 9:: shows fractional cross-sectional views of the latching element in engagement with the latching contour of the handpiece neck similar to the view shown in Fig. 4, wherein different views A to D show exemplary variations of the sloped unlocking surface for radially moving the latching element into the unlocking position by means of rotation of the attachment part relative to the handpiece neck.

### DETAILED DESCRIPTION OF THE INVENTION

The following is a description of numerous versions of an attachment part and a handpiece suitable to be connected in order to form an electric toothbrush. The description is to be construed as exemplary only and does not describe every possible embodiment since describing every possible embodiment would be impractical, if not impossible, and it will be understood that any feature, characteristic, structure or component described herein can be deleted, combined with or substituted for, in whole or in part, any other feature, characteristic, structure or component. In addition, single features or (sub)combinations of features may have inventive character irrespective of the feature combination provided by the claims, the respective part of the specification or the drawings.

According to an aspect there is provided a coupling between a handpiece and an attachment part of an electric toothbrush including a latching element and a latching contour which are adapted to lockingly engage with each other by radial movement relative to each other so as to axially lock the attachment part to the handpiece.

Said latching element and/or said latching contour may be provided with a circumferentially sloped unlocking surface for transforming a circumferential movement of the latching element relative to the latching contour due to rotation of the connecting piece relative to the neck about the longitudinal axis of the toothbrush into a radial movement of the latching element relative to the latching contour to unlock the latching element from the latching contour.

To provide for a secure axial locking of the attachment part onto the handpiece neck, but still allowing for easy dismounting of the attachment part, the present invention provides a latching mechanism which includes a radially movable latching element adapted to be engaged with a latching contour when the attachment part is axially moved onto the handpiece neck along the longitudinal axis of the tubular connecting piece of the attachment part and/or the longitudinal axis of the handpiece which longitudinal axes may be coaxial to each other and/or may together define the longitudinal axis of the toothbrush. At least one of said latching element and said latching contour may be provided with a circumferentially sloped unlocking surface for transforming a circumferential movement of the latching element relative to the latching contour due to rotation of the attachment part relative to the handpiece about the aforementioned longitudinal axis into a radial movement of the latching element and the latching contour relative to each other so as to unlock the latching element from the latching contour. Even if the latching element and/or the latching contour are designed such that even strong axial forces trying to separate the attachment part from the handpiece cannot disengage the latching element from the latching contour, there is easy operation available and dismounting the attachment part can be achieved with limited forces since the coupling between the attachment part and the handpiece provides an additional axis of movement to unlock the latching element from the latching contour. The sloped surface effects a wedge-like actuating force urging the latching element radially towards its unlocking position when the latching element and the latching contour are moved relative to each other in the circumferential direction what may be achieved by means of rotation of the attachment part relative to the handpiece about the longitudinal axis thereof. Upon such rotation and/or circumferential movement of the latching element relative to the latching contour, the attachment part easily may be removed from the handpiece along the longitudinal axis, since the latching element no longer locks the attachment part in the longitudinal direction.

It is basically sufficient when only one of the latching element and the latching contour is provided with such sloped surface. Alternatively, both the latching element of the attachment part and the latching contour of the handpiece neck may be provided with such sloped surface so that a pair of sloped surfaces may smoothly slide onto each other to transform circumferential movement into radial movement to unlock the latching element from the latching contour.

Such unlocking sloped surface may have different contours. For example, the sloped unlocking surface may have a rounded and/or beveled contour when viewed in a cross-sectional plane perpendicular to the longitudinal axis of the toothbrush, wherein such rounded and/or beveled contour may be inclined relative to a radial plane that touches or goes through said rounded and/or beveled contour such that rotation of the attachment part relative to the handpiece along the longitudinal axis thereof causes the inclined contour to slide onto the corresponding contour in engagement therewith. Thereby a wedge-like actuating force is created that forces the latching contour of the neck and the latching element of the attachment part to radially move relative to each other into the unlocking position.

In addition or alternatively, a side edge of the latching element and/or a side edge of the latching contour which side edge, when taking into account the rotational/circumferential movement due to rotation of the attachment part relative to the handpiece, forms a leading edge of the latching element and/or the latching contour, may be provided with such rounded and/or beveled contour inclined to the radial direction. For example, such leading side edge may form an obtuse contour providing for the wedge-like actuation force urging the latching element radially outwards or inwards towards its unlocked position.

Depending on the arrangement and design of the peripheral mating surfaces, the said latching element may move inwardly to achieve its unlocked position or may move outwardly to achieve its unlocked position. For example, the latching contour of the handpiece may be provided in/on the outer peripheral surface of the neck, wherein the latching element of the attachment part may be adapted to engage with such locking contour in the outer peripheral surface of the neck, wherein the latching element may elastically flex radially outwards to be disengaged and/or unlocked from the latching contour of the neck. The latching element may be provided with a side edge forming the front face when moving the latching element circumferentially. Such front side face may form a planar surface extending at an obtuse angle from the inner circumferential surface of the latching element. In addition or alternatively, the latching contour in the outer peripheral surface of the handpiece neck may include a recess having at least one side wall that is tapered such that the width of the recess becomes smaller towards the bottom of the recess.

To allow the latching element to flex radially inwards and outwards, the said latching element may be configured to form a cantilevered, elongated structure such as a flexing finger which may be integrally formed with the tubular connecting piece, but separated from the body of such connecting piece by a U-shaped separation slot. Such latching element structure may elastically deform so as to allow the latching element to move radially inwards and outwards.

In addition or alternatively to such elastic finger with a circumferentially sloped unlocking surface, the latching element may be part of a rocking bar pivotably supported about a rocking axis and having a latching end as well as an operation end opposite to said latching end, wherein movement of the operation end of the rocking bar is transformed into locking/unlocking movement of the latching end. Such rocking bar considerably facilitates unlocking of the latching element. For example, the position of the rocking axis may be chosen such that the distance of the operation end to the rocking axis differs from the distance of the latching end from the rocking axis. Such positioning of the rocking axis allows for providing a sufficient unlocking movement of the latching end with limited forces acting upon the operation end. For example, the operation end may be chosen to be further away from the rocking axis than the latching end, thereby providing for a leverage that allows for unlocking the latching element with very limited operating forces. Alternatively, depending on the design of the latching element, the rocking axis may be chosen to be closer to the operation end than to the latching end, thereby allowing for a relatively large unlocking movement of the latching end even when the operation end is moved only slightly.

The rocking axis of such rocking bar may extend into various directions to allow for different modes of operation. For example, the rocking bar may have a rocking axis that extends substantially parallel and/or substantially tangentially to the outer surface of the tubular connecting piece of the attachment part. Such orientation of the rocking axis allows for operation of the operation end substantially in the radial direction. In addition or alternatively, the operation end may form a pushdown end that causes lifting of the latching end to move into the unlocked position when pushing down the operation end. Such pushdown actuation allows for convenient handling since the respective portion of the toothbrush just needs to be pressed what easily can be done by gripping the respective toothbrush portion at opposite peripheral sections.

In addition or alternatively, the attachment part and/or the toothbrush neck may be provided with a pair of such rocking bars positioned on opposite peripheral sections of the toothbrush, wherein each of those opposite rocking bars includes an operation end that can be pushed down in terms of pressing the operating end radially inwards. In other words, the operation ends of the rocking bars can be pressed towards each other to allow for disengagement of the latching ends.

The rocking axes of the rocking bars may extend transverse to the longitudinal axis of the toothbrush and/or tangential to the circumferential direction of the connecting piece of the attachment part and/or the neck of the handpiece.

The peripheral surfaces of the tubular connecting piece of the attachment part and the neck of the handpiece basically may have different shapes and configurations. For example, substantially cylindrical surfaces may be provided for engagement with each other. For example, the neck of the handpiece and/or the tubular connecting piece of the attachment part may be provided with at least one conical surface. Using at least one cone for coupling the attachment part to the handpiece neck allows for a precise fit and avoids undesired play. In particular, the aforementioned latching element and/or latching contour may be associated with such conical mating surface to achieve precise engagement.

In addition or alternatively, the mating surface of the attachment part may form at least one cone and/or is adapted to be engaged with a conical surface of the neck of the handpiece, wherein said conical surface of the neck is provided with a latching contour adapted to be engaged by the latching element, wherein said latching element and said latching contour are adapted to each other such that bringing the latching element into locking engagement with the latching contour urges the mating surface of the attachment part into press-fitting engagement with the conical surface of the neck of the handpiece. More particularly, the latching element and/or the latching contour may be adapted to each other such that engaging the latching element with the latching contour by radial movement relative to each other causes the conical mating surfaces to get into press-fitting contact with each other. The latching element and/or the latching contour may include an axial locking surface which may be sloped with regard to the direction of movement causing locking and/or unlocking. When the latching element may be locked or unlocked by radial movement of the latching element relative to the latching contour, the aforementioned locking contour may be sloped relative to such radial direction.

In addition or alternatively, the said axial locking surface may include a convex and/or rounded shape transforming radial movement of the latching element relative to the latching contour into axial movement of the attachment part relative to the handpiece neck.

To provide for a precise, secure and easy to operate coupling of the attachment part to the handpiece, there may be provided, in addition or alternatively, a double cone at the handpiece neck and the tubular connecting piece of the attachment part, respectively, such double cone including two pairs of conical surfaces adapted to be engaged with each other. For example, the tubular connecting piece of the attachment part may have inner and outer mating surfaces adapted to be engaged with inner and outer peripheral surfaces of the neck of the handpiece, wherein both said inner and outer mating surfaces are formed as conical surfaces which are oriented into opposite directions and form a double cone to be engaged with the neck of the handpiece. In addition, said inner and outer peripheral surfaces of the neck of the handpiece also may be formed both as conical surfaces oriented into opposite directions and forming a double cone to be engaged with the said inner and outer mating surfaces of the attachment part. Due to the orientation of the cone parts into opposite directions, a snugly fitting engagement can be achieved even when tolerances are given. Furthermore, the counter-inclination of the pairs of conical surfaces which engage with each other allows for a more balanced absorbing of the forces acting on the coupling since shear forces resulting from the inclination of the conical surfaces act in opposite directions, thereby achieving at least some compensation and balancing of the shear reaction forces.

The tubular connecting piece of the attachment part may have an inner cone that can be inserted into the interior of the neck of the handpiece, and, in addition, may have an outer cone into which the neck of the handpiece may be inserted. In addition or alternatively, also the neck of the handpiece may have such an inner cone that is inserted into the interior of the tubular connecting piece of the attachment part, and furthermore an outer cone that allows for insertion of an end portion of the tubular connecting piece of the attachment part.

The inner and outer conical surfaces of the tubular connecting piece of the attachment part and/or the inner and outer conical surfaces of the neck of the handpiece may define a ring-like groove between each other. Said groove may have a width increasing towards the handpiece.

In addition or alternatively, an inner one of the conical surfaces of the attachment part to be engaged with the inner peripheral surface of the neck of the handpiece may have a cross-sectional diameter that becomes smaller towards the neck of the handpiece, whereas an outer one of the conical surfaces of the attachment part to be engaged with the outer peripheral surface of the neck of the handpiece may have a cross-sectional diameter that becomes larger towards the handpiece-sided end of the tubular connecting piece. Such counter-inclination of the inner and outer conical surfaces combines easy operation with immunity against tolerances and a certain balancing of reaction forces.

The pairs of conical surfaces may be positioned at different sections of the tubular connecting piece of the attachment part and the neck of the handpiece. To allow for a precise press-fit and a certain clamping of the respective counterpart, the conical surfaces may be positioned coaxially to each other at axial portions of the connecting piece overlapping each other. In particular, the conical surfaces at the end portion of the tubular connecting piece of the attachment part may face each other so as to clamp the conical surfaces of the neck of the handpiece arranged back to back. In the alternative, it would be possible to have the inner and outer conical surfaces of the attachment part slightly eccentrically offset with their axes relative to each other and/or slightly offset in axial direction. However, a coaxial arrangement of the inner and outer conical surfaces overlapping each other in the axial direction allows for a more precise press-fitting and clamping, thus achieving a more secure connection and coupling.

The conical surfaces of the attachment part and/or of the neck of the handpiece may have various shapes, in particular cross-sectional shapes and inclinations. For example, the conical surfaces of the attachment part and the handpiece neck may define circular cross-sections. Alternatively, the conical surfaces could have non-circular cross-sections such as elliptical cross-sections, oval cross-sections or polygonal-like cross-sections.

In addition or alternatively, the conical surfaces to be engaged with each other, may have cross-sectional shapes different from each other. For example, so as to allow discharge and drainage of toothpaste/water slurry and to achieve cleaning of the mating surfaces when dismounting the attachment part from the handpiece, one of the conical surfaces may have a circular cross-section, whereas the other one of the mating conical surfaces may have a riffled or corrugated or wave-shaped or zigzag cross-section defining an enveloping body which is conical. Such riffled or ribbed surface structure may provide for longitudinal ribs the top of which define the aforementioned conical enveloping body that may be engaged with the cooperating conical surface. The recesses between such ribs allow the toothpaste/water slurry to be discharged, wherein the tops of the ribs rub on the conical surface having the circular cross-section, thereby achieving cleaning thereof when the handpiece and the attachment part are rotated relative to each other.

Depending on the desired strength of the coupling forces, the conical surfaces may define full cones extending fully over 360°, or, in the alternative, may include two or more of conical segments separated from each other by one or more separation unit(s), such as a slot-like recess If the conical surface is formed by two or more conical segments, the conical segments and the separation unit(s) together define a cone. For example, the inner conical surface of the attachment part may include two or more conical surface parts separated from each other by slots which may extend in planes containing the cone axis. In order to achieve higher clamping forces, the conical surfaces may define full cones free of slots and having full 360° cross-sections, thereby providing an increased stiffness against flexing and bending the conical surfaces.

The inclination of the conical surfaces may vary, wherein inclination angles ranging from 2x1° to 2x10° achieve a good compromise between exact snug press-fitting even with tolerances, sufficiently high clamping forces and easy operation in terms of decoupling and coupling with limited operation forces. Basically, all conical surfaces of the double cones at the attachment part and the handpiece neck may have the substantially same angles of inclination. For example, each of the inner and outer conical surfaces of the tubular connecting piece and the handpiece neck may be inclined relative to the longitudinal axis of the toothbrush at an angle from about 3° to about 6°, from about 3° to about 5°, from about 3° to about 4° or any other numerical range which is narrower and which falls within such broader numerical range, as if such narrower numerical ranges were all expressly written herein. For example each of the inner and outer conical surfaces of the tubular connecting piece and the handpiece neck may be inclined relative to the longitudinal axis of the toothbrush at an angle of 3.5°.

Alternatively, the pairs of conical surfaces engageable with each other may have different angles of inclination. For example, the outer conical surfaces of the attachment part and the handpiece neck to be engaged with each other may have a smaller inclination whereas the inner conical surfaces of the attachment part and the handpiece neck to be engaged with each other may have a larger inclination. For example, the pair of inner conical surfaces to be engaged with each other may define an angle of inclination ranging from 2x3° to 2x10°, or from 2x4° to 2x10°, or from 2x5° to 2x10° or any other numerical range which is narrower and which falls within such broader numerical range, as if such narrower numerical ranges were all expressly written herein. In particular, the pair of inner conical surfaces to be engaged with each other may define an angle of inclination of 2x7°. In addition, the pair of outer conical surfaces to be engaged with each other may define an angle of inclination of 2x1.5° to 2x6°, or from 2x2° to 2x5°, or from 2x2.5° to 2x4° or any other numerical range which is narrower and which falls within such broader numerical range, as if such narrower numerical ranges were all expressly written herein. In particular, the pair of outer conical surfaces to be engaged with each other may define an angle of inclination 2x3.5°. Giving the inner conical surfaces an inclination angle larger than the inclination angle of the outer conical surfaces takes into account for the different strengths of tubular structures against radial inward pressure and radial outward pressure, more particularly the fact that a tubular structure has less strength against pressing the structure together and a larger strength against pulling or pushing tubular wall segments outwardly. Generally, different sets of inclination angles allow for an advantageous compensation of multi-axial forces and moments having varying orientations.

In the following, a detailed description of several example embodiments will be given. It is noted that all features described in the present disclosure, whether they are disclosed in the previous description of more general embodiments or in the following description of example embodiments, even though they may be described in the context of a particular embodiment, are of course meant to be disclosed as individual features that can be combined with all other disclosed features as long as this would not contradict the gist and scope of the present disclosure. In particular, all features disclosed for either one of the attachment parts for an electric toothbrush or the handpiece of an electric toothbrush may also be combined and/or applied to the combined electric toothbrush itself, if applicable.

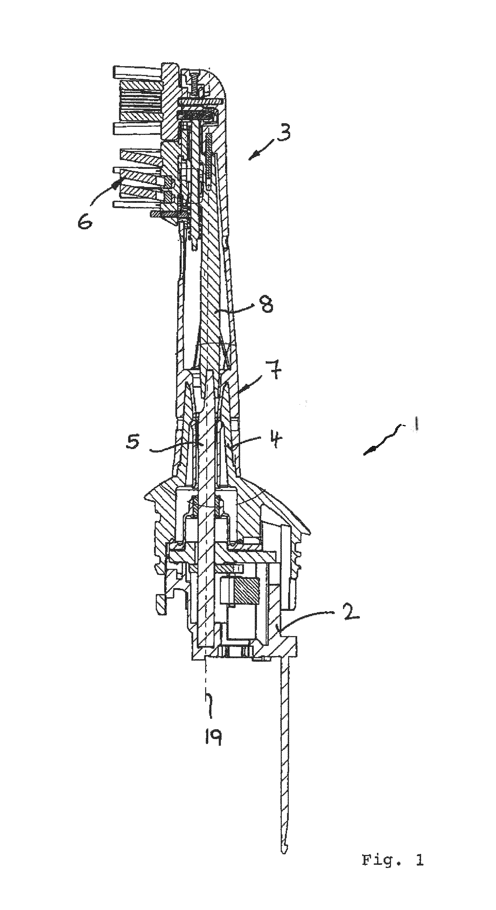

The toothbrush 1 may comprise an elongate, substantially stick-shaped or rod-shaped handpiece 2 and an attachment part 3 connected thereto, wherein said attachment part 3 may be formed as an attachable brush having a working head 6 comprising a bristle field. The working head shown in Fig. 1 as well as the bristle field shown in Fig. 1 are given as an example only and shall not limit the scope of the invention. In particular, other bristle field may be mounted to the working head and/or the attachment part 3 may include various other working heads 6 with other cleaning or massaging tools such as, e.g., an interdental cleaning pin, rubber elements, elastomeric elements of various materials and/or shapes, massaging soft plastics cushions or combinations thereof.

The handpiece 2 may include a housing that accommodates a drive motor and energy supply unit such as e.g. a rechargeable battery and a charger coil, and furthermore, a control unit for controlling the toothbrush operation, wherein an actuating switch for switching the drive on and off may be provided on the housing. At one of the end faces of handpiece 2, the housing of the handpiece 2 may form a neck 4 which may serve as a connecting piece intended to be connected with the attachment part 3. In addition, said neck 4 may be truncated or frustum-shaped and may have inner and outer peripheral surfaces 11, 12 which may be conically shaped.

A drive shaft 5 which can be driven in any moving fashion, may extend from the end face of the neck 4 into the tubular connecting piece 7 of the attachment part 3. Said attachment part 3 may comprise a working head 6 that can be driven in any fashion that is transferred from the drive shaft 5 to the working head 6. For example, the working head 6 may be driven in rotationally oscillating fashion about at least one axis and/or may execute axially oscillating movements. The working head 6 is supported on the tubular connecting piece 7 which has overall a substantially tubular shape and which can be pushed onto the neck 4 of the handpiece 2 with an end portion. Inside the tubular connecting piece 7, the attachment part 3 may include an attachment shaft 8 that can be coupled to the drive shaft 5 of the handpiece 2

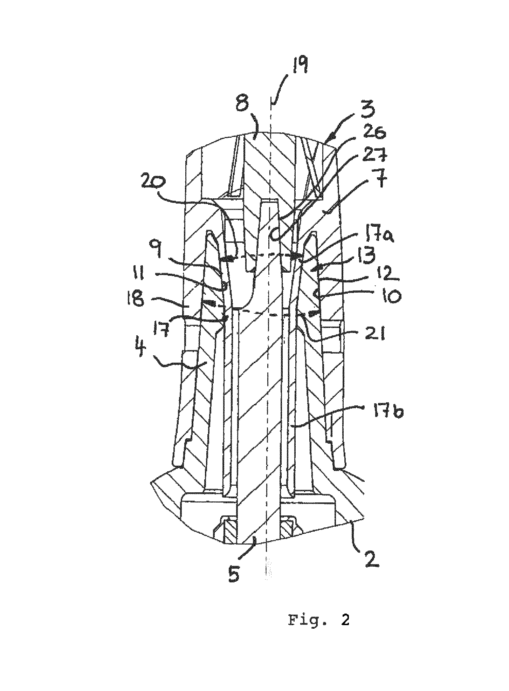

As can be seen from Fig. 2, the end portion of the tubular connecting piece 7 may include a bifurcated end structure with two sleeve-like tubular portions of different diameters so that an inner tubular portion extends within the interior of an outer tubular portion with a ring-shaped groove or gap defined therebetween. The inner tubular portion 17 may be adapted to be inserted into the interior of the neck 4 of the handpiece 2, whereas the outer tubular portion 18 may be adapted to be put onto the neck 4. In other words, the double wall structure of the end portion of the connecting piece 7 may be adapted to receive the tubular or ring-shaped neck 4 of the handpiece 2 in between the inner tubular wall 17 and the outer tubular wall 18 of said double wall structure.

In addition or alternatively, the double wall structure at the handpiece-sided end of the connecting piece 7 may form a double cone, wherein the outer peripheral surface of the inner tubular portion 17 forms an inner mating surface 9 to be engaged with an inner peripheral surface of the neck 4, whereas the inner peripheral surface of the outer tubular portion 18 may form an outer mating surface 10 to be engaged with the outer peripheral surface of the neck 4. The inner and outer mating surfaces 9, 10 may extend substantially coaxially to each other and may be positioned in terms of their axial arrangement at substantially the same section of the tubular connecting piece 7 so that the inner and outer mating surfaces 9, 10 overlap each other with regard to the longitudinal direction of the attachment part 3. In addition or alternatively, the inner and outer mating surfaces 9, 10 may face each other with gap or groove 13 defined therebetween.

Both the inner and outer mating surfaces 9, 10 may be conical in shape with a cross-section of the respective cone being circular. The conical surfaces 9, 10 may be oriented into directions opposite to each other, wherein the inner conical surface 9 may have a diameter that becomes smaller towards the neck 4 of handpiece 2 and whereas the outer conical surface 10 may have a diameter that becomes larger toward the handpiece 2. In addition or alternatively, the inner tubular portion 17 of the end section of connecting piece 7 which inner tubular portion 17 forms the aforementioned inner mating surface 9 may extend beyond the aforementioned conical surface, wherein the conical section 17A may be continued with a substantially cylindrical section 17B.

In addition or alternatively, both the inner and outer tubular portions 17, 18 of connecting piece 7 may be formed as fully ring-shaped tubular structures having a cross-section extending fully over 360°. In the alternative, the cones formed by the inner and outer tubular portions 17, 18 may consist of a plurality of conical frustum fractions which together form a cone (not shown). For example, the respective cones may comprise longitudinal slot-like recesses or grooves to increase flexibility.

In addition, the inner and outer conical mating surfaces 9 and 10 may snugly fitting to the inner and outer peripheral surfaces 11, 12 of the neck 4 which peripheral surfaces 11, 12 may be arranged coaxially to each other and back to back at substantially the same axial sections of the neck 4. In particular, the inner and outer peripheral surfaces 11, 12 may each have a conical shape, wherein the orientation of the respective cones is opposite to each other. In addition, the said conical inner and outer peripheral surfaces 11, 12 of the neck 4 may be configured to be complementary in shape and dimension to the inner and outer mating surfaces 9, 10 of the connecting piece 7 of the attachment part 3.

In addition or alternatively, the angles of inclination of the pair of inner conical surfaces 9, 11 may differ from the angle of inclination of the pair of outer conical surfaces 10, 12 engaging each other, wherein such differing of the angles of inclination may not only be given in terms of orientation or positive/negative preceding sign, but also in terms of absolute value or amount. In particular, the inner conical surfaces 9, 11 may be inclined relative to the longitudinal axis 19 of the toothbrush 1 which, at the same time, can be the longitudinal axis of the handpiece 2 as well as of the attachment part 3, at an angle that is larger than the angle of inclination at which the outer conical surfaces 10, 12 are inclined relative to said longitudinal axis 19. For example, the inner mating surfaces 9, 11 may define a cone having an angle 20 of conical inclination of about 2x7°. The pair of outer conical mating surfaces 10, 12 may define a cone having an angle 21 of conical inclination of about 2x3.5°.

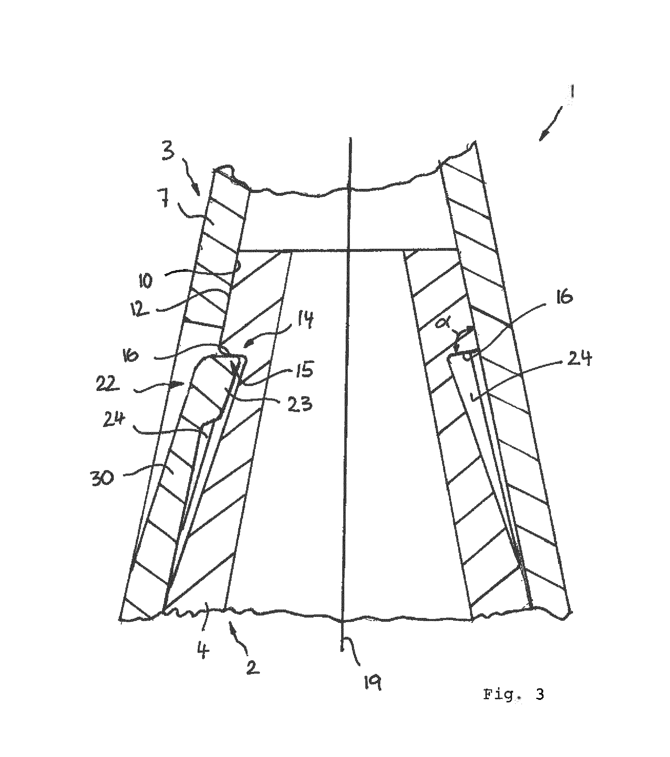

All features disclosed in Fig. 2, whether described individually or in combination are also applicable to the attachment part 3 and the handpiece 2 shown in Fig. 3. Features that are in common in both Figs. 2 and 3 are designated with the same reference numerals and are not described in detail again. At least one pair of conical surfaces to be engaged with each other may be provided with a latching mechanism 22 which may include a pair of engageable undercut locking contours 14, 15. For example, the pair of outer conical surfaces 10, 12 may be provided with such locking contours 14, 15.

In addition or alternatively, the connecting piece 7 of the attachment part 3 may be provided with at least one latching element 30 for axially locking the attachment part 3 to the handpiece 2 and/or for preventing unintentional axial loosening of the attachment part 3. In order to achieve stabile axial locking, a more than one, e.g. a plurality, of such latching elements 30 may be provided and distributed over the circumference of the connecting piece 7 so as to achieve distribution of the locking forces. In particular, a pair of such latching elements 30 may be positioned on opposite sides of the tubular connecting piece 7.

Each of the latching elements 30 may have an elongated, cantilevered structure. For example, the latching elements 30 may include a finger-shaped body which may be an integral part of the body of the tubular connecting piece 7 with a substantially U-shaped separation slot being provided to allow the finger-like structure to bend and flex inwardly and outwardly. Said finger-like, elongate latching element 30 may be attached to the handpiece-sided end of the connecting piece 7 and may extend towards the working head 6 of the attachment part 3. Alternatively, it also would be possible to have the finger-like structure forming the latching element 30 supported at an end closer to the working head 6 and to extend towards the handpiece 2. The elongate structure of the latching element 30 may extend longitudinally, i.e. substantially parallel to a plane containing longitudinal axis 19.

In addition or alternatively, the latching element 30 may include a locking contour 14 at its free end, which may lockingly engage a complementary locking contour 15 provided on the outer peripheral surface 12 of the handpiece neck 4. Such complementary locking contours 14, 15 may include a projection and a recess adapted to each other so that the recess may receive the projection in a manner that axial movement in the direction of the longitudinal axis 19 is prevented. In addition or alternatively, the free end of latching element 30 may include a projection 30 which extends radially inwards to be received within recess 24 provided in the outer peripheral surface 12 of the neck 4. Such recess 24 is exemplary and non-limiting shown on the right side of Fig. 3. In addition, the corresponding latching element 30 is not being shown in order to more clearly present the recess 24.

In addition or alternatively, the projection 23 and the recess 24 are each provided with an undercut surface 16 which may extend substantially in the circumferential direction and/or substantially parallel to a plane perpendicular to the longitudinal axis 19. In addition or alternatively, said undercut surface 16 limiting the recess 24 on the attachment side thereof, may extend at an angle α which may be a substantially rectangular angle relative to the conical surface of neck 4 or may be slightly larger than 90°.

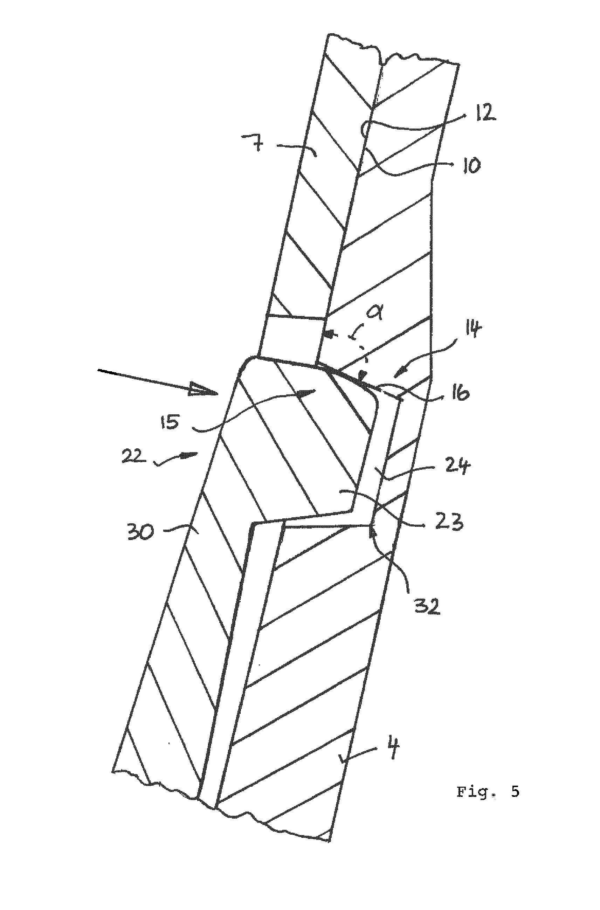

An example of an angle α larger than 90° is shown in Fig. 5. All features disclosed in Fig. 1 to 4, whether described individually or in combination are also applicable to the latching element 30 shown in Fig. 5. Features that are in common with features already shown in Figs. 1 to 4 are designated with the same reference numerals and are not described in detail again. An obtuse angle α may help to achieve axial press-fitting of the mating conical surfaces 10, 12. In particular, a slightly obtuse angle α transforms the radial movement of the latching element 30 into an axial movement of the attachment part 3 that pulls said attachment part 3 further onto the conical neck 4. The further the projection 23 of the latching element 30 moves into the recess 24, the more the latching element 30 pulls/pushes attachment part 3 onto neck 4 in the axial direction. In the alternative or in addition to such slightly obtuse angle α, the undercut surface 16 of projection 23 of latching element 30 may have a sloped surface which includes an inclined portion which is inclined or sloped in a wedge-like manner relative to the direction of movement of the projection 23 when this projection 23 engages with the recess 24. In other words, the end surface of the projection 23 may be slightly inclined relative to the radial direction in which the projection 23 may flex inwardly to engage recess 24. Said locking surface of the projection 23 may have a convex shape so as to compensate for tolerances and/or to achieve a secure, press-fitting engagement with recess 24, wherein the tendency of the latching element 30 to unintentionally disengage is suppressed. In addition, the locking end surface of projection 23 may include an inner portion with an ascending slope so that the middle portion between such sloped portions gets into engagement with the undercut surface 16 of recess 24. In addition or alternatively, the undercut surface 16 of the recess 24 may have a convex shape with such inversely sloped edge portions, and/or the locking surface of the projection 23 cooperating with such undercut surface 16 of the recess 24 may extend at a slightly obtuse angle relative to the conical surface of the neck 4.

To couple the attachment part 3 onto the neck 4 of the handpiece 2, the attachment part 3 and the neck 4 of the handpiece 2 can be moved relative to each other so as to approach each other or get closer to each other, wherein such axial movement can be parallel to the longitudinal axis 19 of toothbrush 1. The neck 4 is inserted into groove 13 between the inner and outer tubular portions 17, 18 of the connecting piece 7. When further pushing the attachment part 3 and the handpiece 2 onto each other, the pairs of inner and outer conical surfaces 9, 11 and 10, 12 come into snugly fitting engagement with each other. During such approaching procedure, the latching element 30 is caused to deflect, wherein in particular the finger-like structure may be deflected outwardly in an elastic manner so as to allow the projection 23 to slide over the conical surface 12 before it reaches the cooperating recess 24. When such recess 24 is reached, the portion of the finger-shaped latching element 30 where the projection 23 is provided may flex inwardly back into or towards its undeflected positioning, thereby achieving form-fitting or locking of the structures.

To decouple the attachment part 3 from handpiece 2, the attachment part 3 and the handpiece 2 can be rotated relative to each other about the longitudinal axis 19, wherein first the locking contours 14, 15 of latching element 30 and latching contour 32 get out of engagement with each other by means of radial deflection of the latching element. The movement can be exemplary seen from Fig. 3.

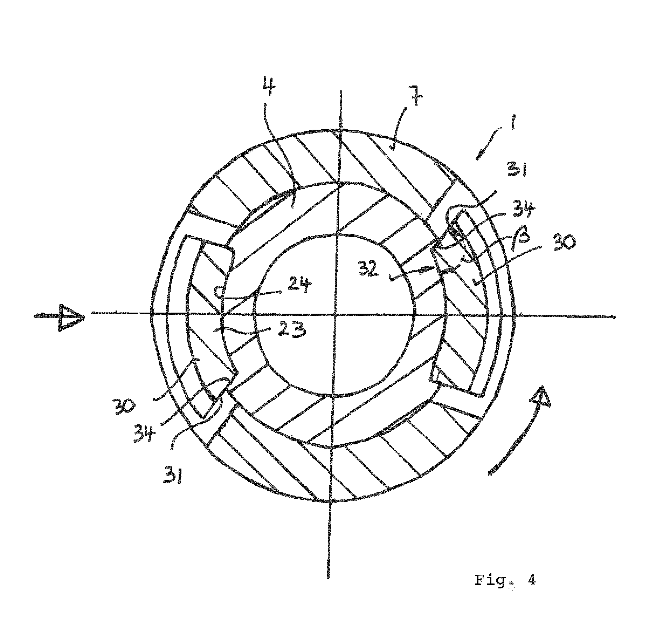

In addition or alternatively, the projection 23 and/or the recess 24 of locking contours 14, 15 may be provided with a sloped unlocking surface 31, 34 which may extend at an acute angle relative to the radial direction. An example of a sloped unlocking surface 31, 34 is shown in Fig. 4. All features disclosed in Fig. 1 to 3 and 5, whether described individually or in combination are also combinable with the sloped unlocking surface 31, 34 shown in Fig. 4. Features that are in common with features already shown in Figs. 1 to 3 and 5 are designated with the same reference numerals and are not described in detail again. In particular, the side surfaces of projection 23 and recess 24 -said side surfaces limiting the projection 23 and the recess 24, respectively, in the circumferential direction- are sloped relative to a radial plane containing the longitudinal axis 19 and touching or going through said end sides of the projection 23 and recess 24. In addition or alternatively, such sloped surfaces 31, 34 may extend at an acute angle relative to such radial plane, wherein such sloped unlocking surfaces 31, 34 are adapted such that rotation of the attachment part 3 relative to the handpiece 2 causes the latching element 30 to deflect radially outwards. In other words, circumferential movement of the latching element 30 is transformed by said sloped unlocking surfaces 31, 34 into radial movement of the latching element 30 so as to unlock projection 23 from recess 24. To allow for decoupling with limited axial forces, such sloped surfaces 31, 34 may be configured to define an obtuse angle β relative to the conical surface 10, 12, wherein such obtuse angle β may range from 91° to about 120°, from 91° to about 110°or from about 95° to about 100° or any other numerical range which is narrower and which falls within such broader numerical range, as if such narrower numerical ranges were all expressly written herein.

When coupling and decoupling the attachment part 3 to and from handpiece 2, also drive shaft 5 is coupled and decoupled to and from attachment shaft 8. To provide connection of these two shaft parts 5, 8 allowing for transmission of forces and moments, e.g. axial and/or radial forces and moments about an axis of rotation substantially in line with the longitudinal axis of said shafts 5, 8, end portions of the drive shaft 5 and the attachment shaft 8 may be provided with conical surfaces 26, 27 snugly fitting to each other, wherein such conical surfaces 26, 27 may have non-circular cross-sections to allow for transmission of rotational action. In particular, the drive shaft 5 may be provided with an end portion having a conical, truncated or frustum shape. In addition or alternatively, the attachment shaft 8 may be provided with a cup-shaped recess having conical peripheral surfaces so that the end portion of drive shaft 5 may be inserted into such recess in attachment shaft 8. The angle of these conical surfaces 26, 27 may vary, wherein an angle of inclination ranging from about 2x1.5° to about 2x10°, from about 2x2° to about 2x5° or any other numerical range which is narrower and which falls within such broader numerical range, as if such narrower numerical ranges were all expressly written herein may be chosen. Such angle of inclination of the cones of the drive shaft 5 and attachment shaft 8 may differ from the angle of inclination of the cones of the connecting piece 7 and neck 4.

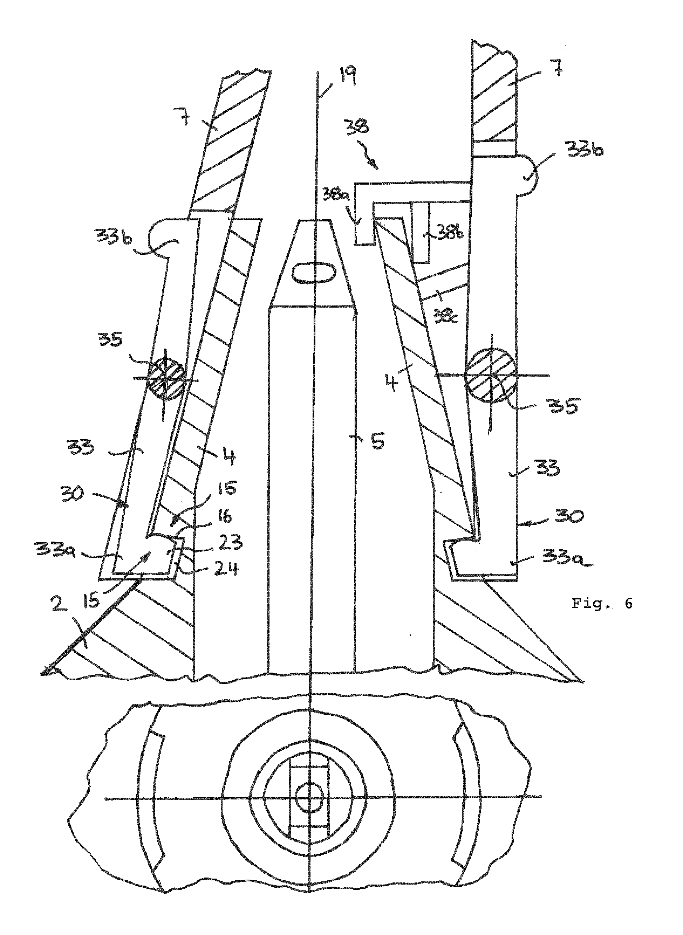

In addition or alternatively, the latching element 30 may be configured to be a part of a rocking bar 33 which is pivotably supported about a rocking axis 35 which may extend parallel and/or tangential to the surface of tubular connecting piece 7. An example of a latching element 30 being configured to be a part of a rocking bar 33 is shown in Fig. 6. All features disclosed in Fig. 1 to 5, whether described individually or in combination are also applicable to Fig. 6. Features that are in common with features already shown in Figs. 1 to 5 are designated with the same reference numerals and are not described in detail again. Said rocking bar 33 may have an elongate, bar-like structure extending substantially parallel to a plane containing longitudinal axis 19, wherein the rocking axis 35 may extend transverse to the longitudinal axis 19 and substantially tangential to the circumferential direction of the tubular connecting piece 7.

The rocking bar 33 may include opposite ends positioned on opposite sides of said rocking axis 35, one of said end portions forming an operation end 33B and the other end forming a locking end 33A. The said locking end 33A may be provided with a locking contour 14 in connection with latching element 30 as it was already described before. Said locking contour 14 may be adapted to be engaged with locking contour 15 provided on neck 4. As already mentioned before, such locking contours 14, 15 may include projections 23 and recesses24, wherein the rocking bar 14 may include an inwardly projecting projection 23 to be engaged with a recess 24 provided in the outer peripheral surface 12 of neck 4. With regard to shape, dimensions and structure of such locking contours 14, 15, reference is given to the aforementioned description.

By means of such rocking bar structure, easy decoupling of the attachment part 3 may be achieved, in particular when a pair of such rocking bars 33 is arranged on opposite sides of the tubular connecting piece 7. In order to move the latching elements 30, more particularly the projections 23 radially outwards to disengage from locking contour 15 of neck 4, the operation ends 33B can be pressed together what can be easily achieved by gripping the attachment part 3 and pressing the fingers together onto the said operation ends 33B which may be adapted to project radially outwards relative to the body of the tubular connecting piece 7 when the latching elements 30 are in the locking position as it is exemplary shown by Fig. 6. Nevertheless, also such rocking bar structure may be provided with sloped unlocking surfaces 31, 34 to allow for unlocking of the latching mechanism 22 by means of rotation of the attachment part 3 relative to the handpiece 2 about the longitudinal axis 19, as described.

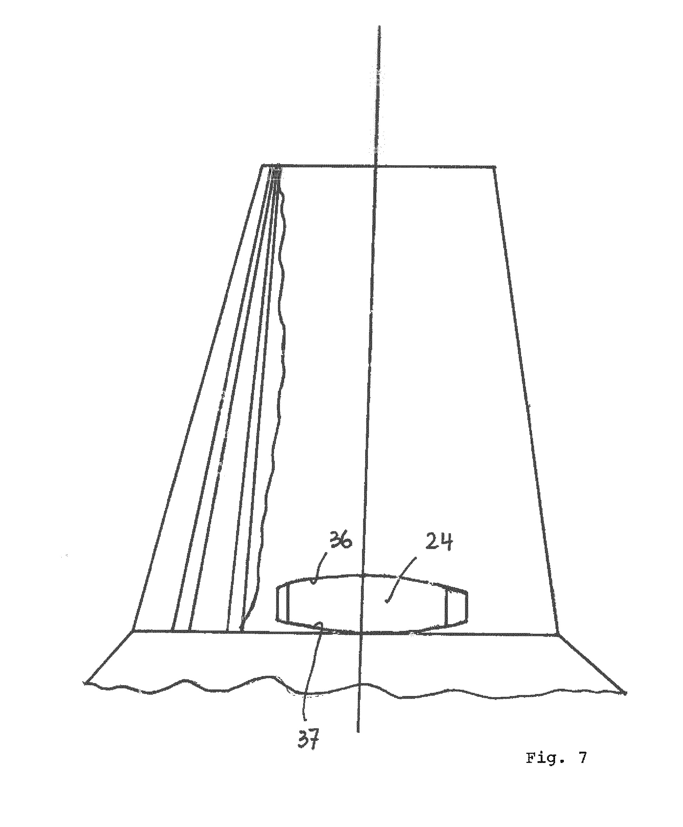

In addition or alternatively, to the convex shapes and/or inclined shapes of the locking contours 14, 15, the recess 24 and/or the projection 23 also may include curved contours. An example of such curved contours is shown in Fig. 7. All features disclosed in Figs. 1 to 7, whether described individually or in combination are also applicable to Fig. 7. Features that are in common with features already shown before are not described in detail again. The recess 24 and/or the projection 23 may have, when viewed from the side in a direction substantially perpendicular to the longitudinal axis 19 and in a plane where the latching elements 30 may move, curved contours 36, 37, wherein the curvature may have orientations opposite to each other. In addition or alternatively, the edges limiting recess 24 towards handpiece 2 and attachment part 3, i.e. in the axial direction, may have a concave curvature and/or may be contoured such that the height of the recess 24 increases towards a middle portion thereof and/or decreases towards the circumferential ends thereof. In addition or alternatively to such shape of the recess 24, projection 23 may have a corresponding shape with corresponding curve side surfaces limiting the projection 23 in the axial direction. In addition, the curved or rounded shape of the recess 24 and the corresponding projection 23 can be provided for example for the latching element structures described before, in particular for the latching element structures exemplary shown in Figs. 3 and/or 6.

As shown by the right hand side of Fig. 6, the coupling of the attachment part 3 and the handpiece 2 does not necessarily need to have a pair of conical surfaces. In particular, neck 4 may have the conical outer peripheral surface 12 as described, whereas the tubular connecting piece 7 may have a cylindrical configuration. So as to nevertheless fit to the conical structure of the neck 4, adapter elements 38 may be provided at the interior side of the connecting piece 7, such adapter elements 38 being adapted to fit onto the conical surface of the neck 4. For example, such adapter elements may include adapter elements 38A and 38B extending substantially in the axial direction, i.e. substantially parallel to longitudinal axis 19, wherein such axial adapter elements 38A and 38Bb may have a substantially cylindrical configuration and/or may include an inner adapter element 38A to be inserted into the interior space surrounded by the neck 4, and/or an outer adapter element 38B extending on the outer side of said neck 4. In addition or alternatively, a substantially radial adapter element 38C may be provided to be engaged with the outer peripheral surface of neck 4. The adapter elements 38 are adapted in shape and/or dimension such that they may be brought into form-fitting engagement with an inner and/or outer contour of the neck 4.

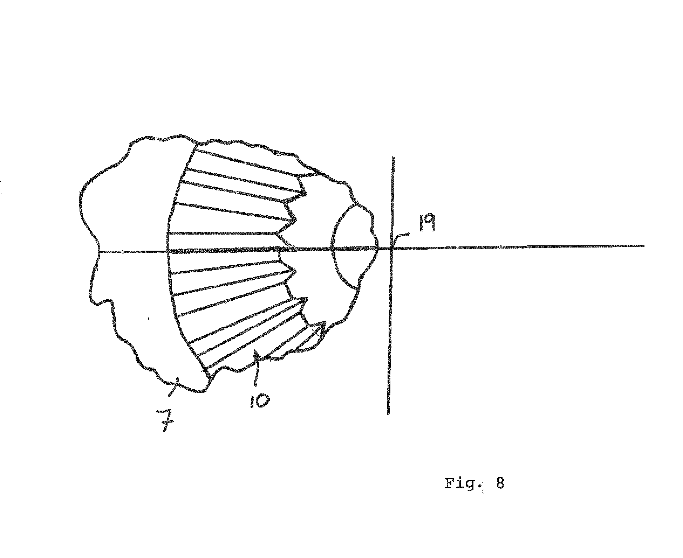

In addition or alternatively, one of the mating surfaces 10, 12 of the connecting piece 7 and neck 4, in particular the conical surface of the connecting piece 7, may include a ribbed and/or riffled and/or wave-shaped cross-section defining an enveloping conical surface. Examples for such enveloping structures are shown in non-limiting Figs. 7 and 8 which can be combined with all features described before. For example, longitudinally extending ribs may be provided the tops of which define such conical enveloping body to be engaged with the conical surface 12 of neck 4 which may have a circular cross-section. By means of such ribbed surface structure, toothpaste/water slurry may be discharged and cleaning of the surfaces is achieved when rotating the attachment part 3 relative to the handpiece so as to achieve disengagement of the latching elements 30. Figure 7 shows an example of such riffled structure on the neck 4, whereas Fig. 8 shows an example of such riffled structure on the mating surface of connecting piece 7. As mentioned, only one of those components may be provided with such riffled structure to allow for the aforementioned cleaning when rotating the handpiece 2 relative to the attachment part 3.

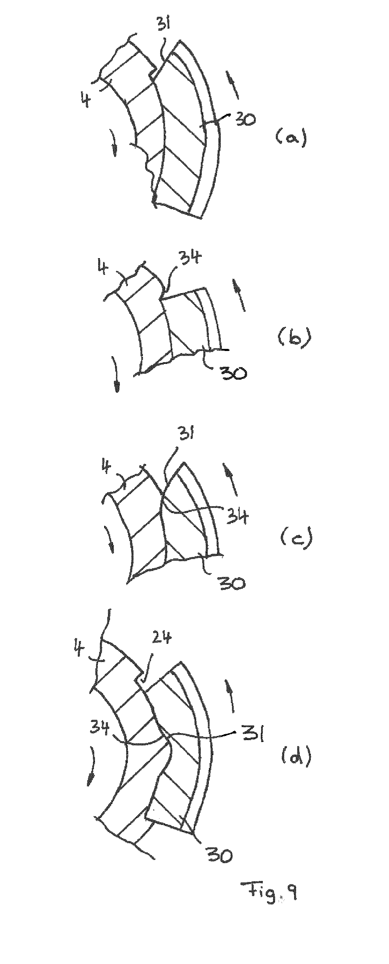

In addition or alternatively, the configuration of the sloped unlocking surfaces 31, 34 which were explained before, in particular on the basis of example Figs. 3 to 5, more particularly on the basis of example Fig. 4, may be varied. As exemplary shown by Figs. 9(A) and 9(B), it may be sufficient to provide only the latching element 30 with such sloped unlocking surface 31 or to provide only the latching contour 15 of neck 4 with such unlocking sloped surface 34. In addition or alternatively to such configuration, it is also possible to provide either one or both of latching element 30 or latching contour 14 with a curved unlocking surface 31, 34 as exemplary shown by Fig. 9(C). Furthermore, the sloped unlocking surface does not necessarily need to be associated with the leading side edge of the projection 23 and/or the recess 24, but also may be provided in a middle portion of recess 24 and/or the interior side of projection 23, as exemplary shown by Fig. 9(D).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An attachment part (3) for an electric toothbrush (1), comprising a tubular connecting piece (7) adapted to be connected to a neck (4) of a handpiece (2) of the toothbrush (1) by axial movement of the connecting piece (7) relative to the handpiece (2) along a longitudinal axis (19) thereof, said connecting piece (7) having at least one peripheral mating surface (9, 10) adapted to engage with an inner or outer peripheral surface (11, 12) of the neck (4) of the handpiece (2), wherein at least one latching element (30) is provided for locking the connecting piece (7) onto the neck (4), said latching element (30) being radially movable to lock and/or unlock with and/or from a latching contour (32) of the neck (4) by radial movement, **characterized in that** the latching element (30) is provided with a circumferentially sloped unlocking surface (31) for transforming a rotational movement of the connecting piece (7) about the longitudinal axis (19) of the tubular connecting piece (7) into a radial movement of the latching element (30).

2. The attachment part (3) according to the preceding claim, wherein said unlocking surface (31) has a rounded and/or beveled contour when viewed in a cross-sectional plane perpendicular to the longitudinal axis (19), said rounded and/or beveled contour being inclined relative to a radial plane going through said rounded and/or beveled contour such that circumferential movement of the unlocking surface (31) against the latching contour (32) of the neck (4) forces the latching element (30) to radially move towards the unlocking position.

3. The attachment part (3) according to anyone of the preceding claims, wherein the latching element (30) is associated with the at least one peripheral mating surface (10) of the connecting piece (7) adapted to engage with the outer peripheral surface (12) of neck (4), wherein said latching element (30) is adapted to move radially outwards to unlock from the latching contour (32) of neck (4), said latching contour (32) being provided in the outer peripheral surface (12) of neck (4).

4. The attachment part (3) according to the preamble of claim 1 or anyone of the preceding claims, wherein the latching element (30) is part of a rocking bar (33) having a latching end (33A) and an operation end (33B) opposite to the latching end (33A), wherein movement of the operation end (33B) is transformed into locking and/or /unlocking movement of the latching end (33A), preferably wherein the rocking bar (33) is pivotably supported about a rocking axis (35) extending substantially parallel and/or substantially tangential to the outer peripheral surface contour of the tubular connecting piece (7), said operation end (33B) forming a pushdown portion adapted to be pushed down radially inwards to cause unlocking movement of the latching end (33A) radially outwards.

5. The attachment part (3) according to anyone of the preceding claims, wherein the at least one peripheral mating surface (9, 10) of the tubular connecting piece (7) is formed as a conical surface and/or is adapted to engage with the conical outer peripheral surface (12) of the neck (4) of the handpiece (2), wherein the latching element (30) is adapted to engage with the latching contour (32) provided in/on a cone defined by said outer peripheral surface (12) of the neck (4).

6. The attachment part (3) according to anyone of the preceding claims, wherein said tubular connecting piece (7) is provided with inner and outer mating surfaces (9, 10) adapted to be engaged with inner and outer peripheral surfaces (11, 12) of the neck (4) of the handpiece (2), wherein both inner and outer mating surfaces (9, 10) are formed as conical surfaces which are oriented into opposite directions and form a double-cone adapted to engage with the neck (4) of the handpiece (2).

7. The attachment part (3) according to the preceding claim, wherein said inner and outer mating surfaces (9, 10) define a ring-shaped groove (13) between each other, said groove (13) having a width increasing towards the handpiece-sided end of the tubular connecting piece (7), and/or wherein an inner one of said conical surfaces (9) to be engaged with the inner peripheral surface (11) of the neck (4) of the handpiece (2) has a cross-sectional diameter becoming smaller towards the handpiece-sided end of the tubular connecting piece (7), whereas an outer one of said conical surfaces (10) to be engaged with the outer peripheral surface (12) of said neck (4) of the handpiece (2) has a cross-sectional diameter becoming larger towards the handpiece-sided end of the tubular connecting piece (7).

8. The attachment part (3) according to anyone of the preceding claims, wherein at least one of the conical surfaces (9, 10) defines a circular cross-section and/or a closed-ring shaped cross-section fully extending over 360°.

9. A handpiece of an electric toothbrush (1), comprising a neck (4) having at least one peripheral surface (11, 12) adapted to be engaged with an inner or outer mating surface (9, 10) of an attachment part (3), wherein said at least one peripheral surface (11, 12) is provided with a latching contour (32) adapted to lock with a latching element (30) of the attachment part (3), said latching contour (32) being provided with a circumferentially sloped unlocking surface (34) for transforming circumferential movement of the latching contour (32) relative to the latching element (30) of the attachment part (3) due to rotation of the attachment part (3) relative to the handpiece (2) about a longitudinal axis (19) thereof into a radial movement of the latching element (30).

10. The handpiece according to Claim 9, wherein said latching contour includes an undercut locking contour (15) in terms of a projection and/or recess (24) in the outer peripheral surface (12) of the neck (4) of the handpiece (2), said projection and/or recess (24) having a rounded and/or beveled contour when viewed in a cross-sectional plane perpendicular to the longitudinal axis (19) of the handpiece (2), said rounded and/or beveled contour being inclined relative to a radial plane going through said rounded and/or beveled contour such that circumferential movement of the latching contour (31) against the latching element (30) of the attachment part (3) forces the latching element (30) to radially move towards its unlocking position.

11. The handpiece according to Claims 9 or 10, wherein at least one peripheral surface (11, 12) of the neck (4) is formed as a conical surface adapted to engage with the attachment part (3).

12. A toothbrush comprising a handpiece (2) according to anyone of Claims 9 to 11 and/or an attachment part (3) according to anyone of Claims 1 to 8.

13. The toothbrush according to Claim 12, wherein the latching element (30) of the attachment part (3) and the latching contour (32) of the neck (4) of the handpiece (2) are adapted to each other in such a manner that axial movement of the attachment part (3) relative to handpiece (2) about the longitudinal axis (19) thereof locks the latching element (30) with the latching contour (32), whereas rotation of the attachment part (3) relative to the handpiece (2) about the longitudinal axis (19) thereof unlocks the latching element (30) from latching contour (32).

14. The toothbrush according to Claim 13, wherein the latching element (30) of the attachment part (3) is provided with an undercut locking contour (14) in terms of a projection (23) and/or a recess (24) adapted to be brought into form-fitting engagement with a locking contour (15) of the inner and/or outer peripheral surface (11, 12) of the neck (4) of the handpiece (2), wherein said locking contours (14, 15) of the latching element (30) and the peripheral surface (12) of the neck (4) are adapted to each other such that engagement of said locking contours (14, 15) with each other urges the conical peripheral surfaces (10, 12) of the connecting piece (7) of the attachment part (3) and the neck (4) of the handpiece (2) into press-fitting engagement with each other.

15. The toothbrush according to Claim 14, wherein the locking contour (14) of the latching element (30) and/or the locking contour (15) of the peripheral surface (12) of the neck (4) includes a sloped engagement surface for transforming an axial force trying to axially separate the attachment part (3) from the handpiece (2) into a locking force acting upon the latching element (30), when the latching element (30) is in its locking position, said locking force urging the latching element (30) towards its locking position, and/or transforming a radial force urging the latching element (30) towards its locking position into an axial force urging the attachment part (3) and the handpiece (2) relative to each other in the axial direction.
